# EUROPÄISCHE PATENTSCHRIFT

(11) **EP 2 815 899 B1**
(45) Veröffentlichungstag und Bekanntmachung des Hinweises auf die Patenterteilung: **19.09.2018**
(21) Anmeldenummer: 14450027.9
(22) Anmeldetag: 22.05.2014
(51) Int. Cl.: B60D 1/14, B60D 1/56

(54) **Hochlastzugöse**
Heavy duty towing eye
Attelage à charge élevée

(30) Priorität: 19.06.2013 AT 4952013
(43) Veröffentlichungstag der Anmeldung: 24.12.2014
(73) Patentinhaber: Scharmüller, Josef, 4892 Fornach (AT)
(72) Erfinder: Scharmüller, Christine, AT - 4892 Fornach (AT); Scharmüller, Josef, AT - 4892 Fornach (AT)
(74) Vertreter: Gibler & Poth Patentanwälte KG

(56) Entgegenhaltungen:
- EP-A1- 2 080 644
- DE-A1- 10 153 032
- DE-U- 1 865 806
- US-A- 3 169 783

## Beschreibung

Die Erfindung betrifft eine Hochlastzugöse gemäß dem Oberbegriff des Patentanspruches 1,

Hochlastzugösen sind Zugösen, welche zum Ziehen von schweren Anhängern, beispielsweise im Bereich der Landwirtschaft, verwendet werden. Hierbei sind Hochlastzugösen bekannt, welche ein an dem Anhänger befestigbares Lagergehäuse aufweisen, wobei ein ein Kupplungselement aufweisender Schaft in das Lagergehäuse eingesteckt ist und an einer dem Kupplungselement gegenüberliegenden Seite mit einem verschraubten Sicherungselement gesichert ist. Durch diese Bauweise kann der Schaft ausgetauscht werden. Der Schaft ist üblicherweise rotationssymmetrisch um die Mittelachse, wobei ein Durchmesser des Schaftes mit zunehmender Entfernung vom Kupplungselement abnimmt, damit der Schaft in das Lagergehäuse gesteckt werden kann.

Nachteilig daran ist, dass bei der Gestaltung des Schaftes darauf Rücksicht genommen werden muss, dass dieser in das Lagergehäuse einsteckbar ist. Weiters muss die Schraube, welche das Sicherungselement befestigt, im Betrieb große Zugbelastungen aufnehmen und dementsprechend dimensioniert sein und mit einem entsprechenden Drehmoment befestigt sein, wodurch das Austauschen des Schaftes erschwert ist.

Die EP 2 080 644 A1 offenbart eine Zugöse, wobei ein Kuppelelement an einem Schaft angeformt ist. Hierbei ist ein Lagergehäuse mit einer zylindrischen Bohrung vorgesehen, in welche der Schaft eingebracht und befestigt werden kann.

Aus der US 3 169 783 A ist eine Zugöse bekannt, wobei ein Kuppelelement an einem Schaft angeformt ist. Der Schaft ist in einer randoffenen Ausnehmung des Lagergehäuses angeordnet, wobei die Ausnehmung mittels einer verschraubbaren Klemme verschließbar ist.

Aus der DE 101 53 032 A1 ist eine Abschleppvorrichtung bekannt, wobei am Kraftfahrzeug eine Frontalaufnahme und eine Heckaufnahme mit unterschiedlichen Aufnahmequerschnitten angeordnet sind. In beide Aufnahmen kann ein Schaft einer Abschleppöse befestigt werden, wobei der Schaft zu unterschiedlich ausgebildete Befestigungsabschnitte aufweist, um wahlweise mit der korrespondierenden Aufnahme befestigt zu werden.

Die DE 18 65 806 U offenbart eine Zugöse, wobei ein Kuppelelement aufweisender gerader Schaft in einem Lagergehäuse angeordnet ist, und auf der dem Kuppelelement abgewandten Seite des Schaftes ein Sicherungselement des Schaftes an dem Lagergehäuse abgestützt ist. Das Lagergehäuse ist einteilig ausgebildet und weist eine zentrale, durchgehende Bohrung auf, in welcher der Schaft eingebracht wird.

Aufgabe der Erfindung ist es daher eine Hochlastzugöse der eingangs genannten Art anzugeben, mit welcher die genannten Nachteile vermieden werden können, und welche in der Form besser auf die ausgelegte Belastung angepasst sein kann. Erfindungsgemäß wird dies durch die Merkmale des Patentanspruches 1 erreicht. Dadurch ergibt sich der Vorteil, dass durch das geteilte Lagergehäuse die Form des Schaftes frei gewählt und auf die ausgelegte Belastung und den besonderen Erfordernissen besser abgestimmt sein kann. Beispielsweise kann der Durchmesser des Schaftes an jener Stelle am größten sein, an welcher die höchsten Biegemomente auftreten. Dadurch kann die Hochlastzugöse leichter und Materialsparender ausgebildet sein, wobei ein optimaler Verlauf der Spannungsverläufe bei der ausgelegten Belastung erreicht werden kann. Weiters kann der Wechsel des Schaftes erleichtert werden, da ein Öffnen des Lagergehäuses leichter möglich ist als das Abnehmen des Sicherungselementes. Bei dem Einbau oder Ausbau des Schaftes ist es weiters von Vorteil, dass dieser seitlich eingelegt werden kann und nicht frontal eingeschoben werden braucht, da dadurch ein geringerer Platzbedarf notwendig ist.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 zeigt eine bevorzugte Ausführungsform einer Hochlastzugöse als Explosionsdarstellung;
Fig. 2 zeigt ein Lagergehäuse der bevorzugten Ausführungsform einer Hochlastzugöse in Seitenansicht;
Fig. 3 zeigt das Lagergehäuse der bevorzugten Ausführungsform in Vorderansicht;
Fig. 4 zeigt den Schnitt entlang der Linie A-A in Fig. 2;
Fig. 5 zeigt das Lagergehäuse der bevorzugten Ausführungsform in Draufsicht;
Fig. 6 bevorzugte Ausführungsform einer Hochlastzugöse in einer axonometrischen Darstellung;
Fig. 7 zeigt einen Schaft der bevorzugten Ausführungsform einer Hochlastzugöse in einer axonometrischen Darstellung;
Fig. 8 zeigt das Lagergehäuse der bevorzugten Ausführungsform in einer axonometrischen Darstellung; und
Fig. 9 zeigt das Lagergehäuse der bevorzugten Ausführungsform als Explosionsdarstellung;

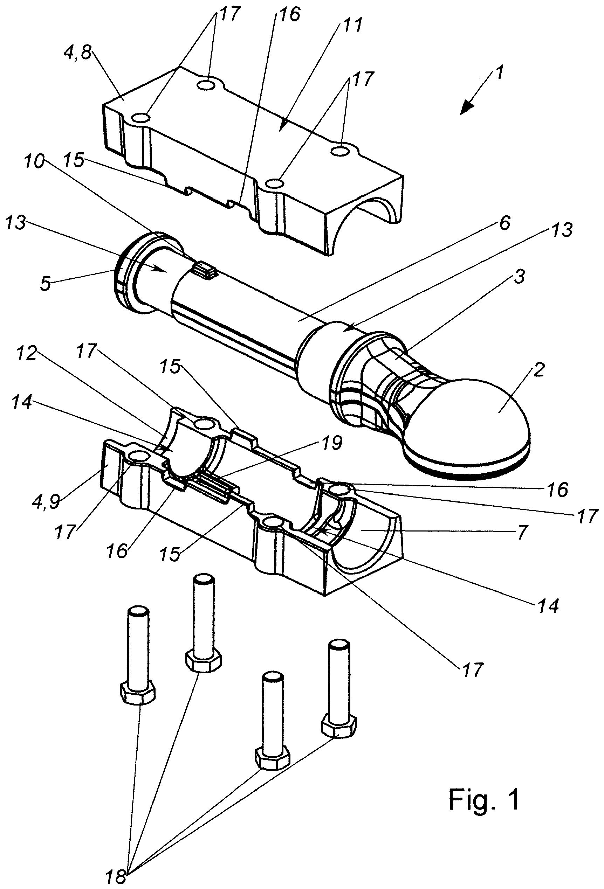

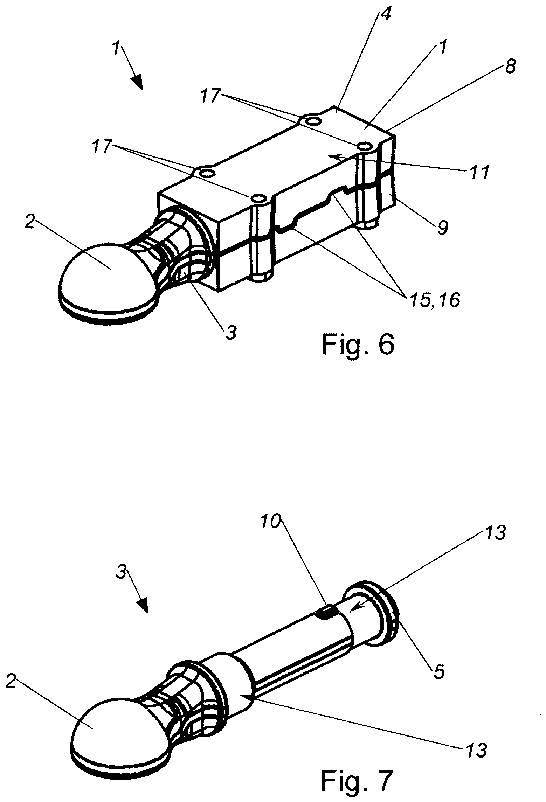

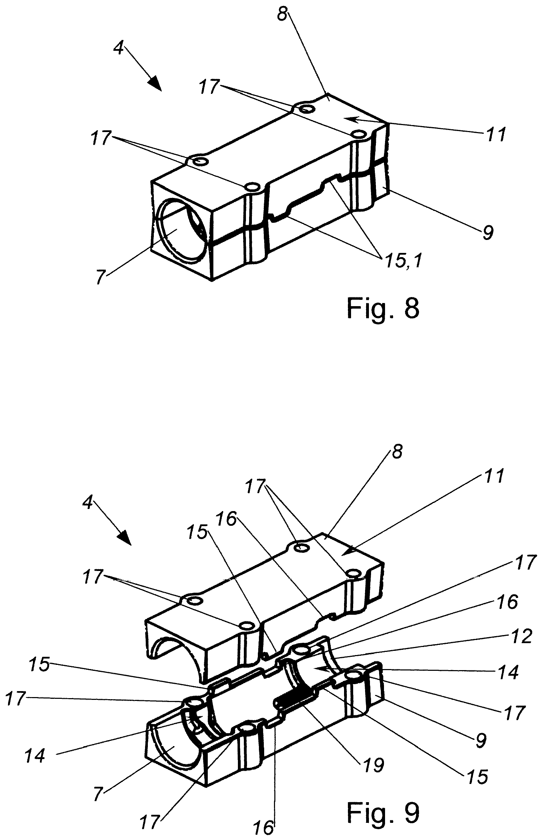

Die Fig. 1 bis 9 zeigen eine bevorzugte Ausführungsform und Teile der bevorzugten Ausführungsform einer Hochlastzugöse 1 für einen Fahrzeuganhänger, wobei ein ein Kuppelelement 2 aufweisender gerader Schaft 3 in einem Lagergehäuse 4 angeordnet ist, auf der dem Kuppelelement 2 abgewandten Seite des Schaftes 3 ein Sicherungselement 5 des Schaftes 3 an dem Lagergehäuse 4 abgestützt ist. Eine Hochlastzugöse 1 ist eine Zugöse, also eine Vorrichtung zum Kuppeln eines Fahrzeuganhängers an ein Zugfahrzeug, welche für die Aufnahme hoher Zuglasten und Stützlasten, wie diese beispielsweise in der Landwirtschaft auftreten, ausgebildet ist.

Hierbei weist die Hochlastzugöse 1 ein Kuppelelement 2 auf, welches zum Kuppeln mit einem Gegenkupplungselement vorgesehen ist, wobei das Gegenkupplungselement insbesondere an einem Zugfahrzeug befestigt sein kann.

Wie in Fig. 1, 6 und 7 dargestellt kann bei der bevorzugten Ausführungsform insbesondere vorgesehen sein, dass das Kuppelelement 2 als Kugelpfanne ausgebildet ist. Dass Kupplungselement kann aber auch andere Formen aufweisen und beispielsweise als Ringöse ausgebildet sein.

Der Schaft 3 kann besonders bevorzugt als Schmiedeteil ausgebildet sein.

Der Schaft 3 ist zum Teil in dem Lagergehäuse 4 angeordnet, wobei das Lagergehäuse 4 vorzugsweise derart ausgebildet ist, dass das Lagergehäuse 4 an eine Deichsel eines Fahrzeuganhängers befestigbar ist. Hierbei kann das Lagergehäuse 4 eine insbesondere ebene Befestigungsfläche 11 aufweisen, welche in einem befestigten Zustand der Hochlastzugöse 1 eine Deichsel des Fahrzeuganhängers kontaktiert.

Das Lagergehäuse 4 kann besonders bevorzugt als Schmiedeteil ausgebildet sein.

Der Schaft 3 weist an einer dem Kuppelelement 2 abgewandten Seite ein Sicherungselement 5 auf, welches Sicherungselement 5 an dem Lagergehäuse 4 abgestützt ist und derart den Schaft 3 in dem Lagergehäuse hält.

Vorgesehen ist, dass das Lagergehäuse 4 geteilt ausgebildet ist. Hierbei kann insbesondere das Lagergehäuse 4 aus zwei oder mehr Lagergehäuseteile 8,9 bestehen, wobei in einem zusammengesetzten Zustand des Lagergehäuses 4 der Schaft 3 im Lagergehäuse 4 durch einen Formschluss gehalten ist, und in einem auseinandergenommenen Zustand des Lagergehäuses 4 der Schaft 3 aus dem Lagergehäuse 4 entnehmbar ist. Dabei kann erreicht werden, dass zur Entnahme oder Einbringung des Schaftes 3 in oder aus dem Lagergehäuse 4 das Lagergehäuse 4 geöffnet werden kann, und der Schaft 3 nicht parallel zu seiner Längsachse in das Lagergehäuse 4 geschoben werden braucht.

Weiters kann ein Fahrzeuganhänger umfassend eine Hochlastzugöse 1 vorgesehen sein, wobei die Hochlastzugöse 1 wie vorstehend beschrieben ausgebildet ist. Der Fahrzeuganhänger kann insbesondere ein landwirtschaftlicher Fahrzeuganhänger sein. Weiters kann vorgesehen sein, dass der Fahrzeuganhänger eine Deichsel aufweist, dass das Lagergehäuse 4 an der Deichsel befestigt, insbesondere verschweißt oder verschraubt, ist, und dass die Befestigungsfläche 11 des Lagergehäuses 4 die Deichsel kontaktiert.

Vorzugsweise kann vorgesehen sein, das Sicherungselement 5 an einer Außenseite des Lagergehäuses 4 abgestützt ist. Hierbei kann der Schaft 3 durch das gesamte Lagergehäuse 4 reichen. Dabei kann in vorteilhafter Weise auch ein herkömmlicher Schaft in das Lagergehäuse eingelegt werden.

Insbesondere kann hierbei vorgesehen sein, dass eine Vertiefung 12 an der Außenseite des Lagergehäuses 4 ausgebildet ist, und dass das Sicherungselement 5 in der Vertiefung 12 angeordnet ist.

Alternativ kann vorgesehen sein, dass das Lagergehäuse 4 an der dem Kuppelelement 2 gegenüberliegenden Außenseite geschlossen ist, und dass das Sicherungselement 5 von dem Lagergehäuse 4 umgeben ist.

Besonders bevorzugt kann vorgesehen sein, dass der Schaft 3 einstückig ausgebildet ist. Insbesondere kann vorgesehen sein, dass das Sicherungselement 5 am Schaft 3 angeformt ist. Dabei kann ein besonders vorteilhafter Spannungsverlauf im Schaft 3 erreicht werden, da das Sicherungselement 5, welches im Wesentlichen alle Zugkräfte aufnimmt, direkt am Schaft 3 angeformt ist und die Kräfte gut weiterleiten kann. Weiters kann dadurch die Hochlastzugöse 1 platzsparrender ausgebildet sein, weil kein Platz für eine das Sicherungselement 5 mit dem restlichen Schaft 4 verbindende Schraube vorhanden sein braucht.

Besonders bevorzugt kann vorgesehen sein, dass ein erster Teil 6 des Schaftes 3 in einer Aufnahme 7 des Lagergehäuses 4 angeordnet ist. Das Kuppelelement 2 kann insbesondere an dem ersten Teil 6 des Schaftes 3 angeformt sein, wobei der erste Teil 6 insbesondere rotationssymmetrisch um eine Längsachse des ersten Teils 6 ausgebildet sein kann. Die Längsachse des Schaftes 3 kann hierbei die Längsachse des ersten Teils 6 sein.

Hierbei kann der Schaft 3 gemäß der bevorzugten Ausführungsform aus dem Kuppelelement 2, dem ersten Teil 6 und dem Sicherungselement 5 bestehen, welche zusammen den einstückigen Schaft 3 ausbilden.

Vorzugsweise kann der erste Teil 6 des Schaftes 3 wenigstens eine Kontaktfläche 13 aufweisen, welche mit wenigstens einer gegengleichen Gegenkontaktfläche 14 der Aufnahme 7 in Kontakt ist. Hierbei kann die wenigstens eine Kontaktfläche 13 und die wenigstens eine Gegenkontaktfläche 14 ringförmig um die Längsachse des Schaftes 3 ausgebildet sein. Gemäß der bevorzugten Ausführungsform können jeweils zwei Kontaktfläche 13 und Gegenkontaktfläche 14 vorgesehen sein.

Weiters kann vorgesehen sein, dass die Aufnahme 7 eine Schmiervorrichtung, beispielsweise umfassend einen Grafitkörper, aufweist. Die Schmiervorrichtung kann insbesondere im Bereich der wenigstens einen Kontaktfläche 13 angeordnet sein und die Kontaktfläche 13 schmieren.

Wie in Fig. 1 bis Fig. 6, sowie Fig. 8 und Fig. 9 dargestellt kann vorzugsweise vorgesehen sein, dass das Lagergehäuse 4 ein erstes Lagergehäuseteil 8 und ein zweites Lagergehäuseteil 9 aufweist. Besonders bevorzugt kann der erste Lagergehäuseteil 8 und der zweite Lagergehäuseteil 9 im Wesentlichen gleich groß sein. Hierbei kann das Lagergehäuse 4 besonders einfach und robust ausgebildet sein. Bei einem Fahrzeuganhänger kann hierbei der erste Lagergehäuseteil 8 oder der zweite Lagergehäuseteil 9 an der Deichsel befestigt sein.

Vorzugsweise kann vorgesehen sein, dass das Lagergehäuse 4 im Wesentlichen entlang einer ersten Ebene geteilt ist, und dass eine Längsachse des Schaftes 3 in der ersten Ebene angeordnet ist. Herbei können die Lagergehäuseteile 8,9 im Wesentlichen jeweils eine halbzylinderförmige Aufnahme 7 aufweisen. Durch diese Ausführung können die beiden Lagergehäuseteile 8,9 als im Wesentlichen zwei halbzylinderförmige Schalen ausgebildet sein, welche den Schaft 3 halten. Hierbei kann eine besonders gute Handhabung und eine stabile Bauweise erreicht werden. Weiters können die beiden Lagergehäuseteile 8,9 besonders einfach als Schmiedeteile ausgebildet sein.

Besonders bevorzugt kann vorgesehen sein, dass das erste Lagergehäuseteil 8 und das zweite Lagergehäuseteil 9 zerstörungsfrei lösbar miteinander verbunden sind. Insbesondere können das erste Lagergehäuseteil 8 und das zweite Lagergehäuseteil 9 miteinander verschraubbar sein. Dadurch kann ein einfaches und wiederholbares Öffnen des Lagergehäuses 4 erreicht werden.

Hierbei kann vorgesehen sein, dass das erste Lagergehäuseteil 8 und der zweite Lagergehäuseteil 9 fluchtende Verbindungsmittelaufnahmen 17 aufweist, welche Verbindungsmittelaufnahmen 17 insbesondere zur Aufnahme von Schrauben vorgesehen sein. Eine Mittelachse der Verbindungsmittelaufnahmen 17 kann insbesondere normal zu der Längsachse des Schaftes 3 sein.

Gemäß der bevorzugten Ausführungsform können die Verbindungsmittelaufnahmen 17 des an dem Fahrzeuganhänger befestigbaren Lagergehäuseteils 8,9 ein Gewinde aufweisen, in welche die Schraube 18 eingreifen.

Alternativ kann vorgesehen sein, dass die Verbindungsmittelaufnahmen 17 gewindefrei ausgebildet sind. Hierbei können die Schrauben 18 durch die beiden Lagergehäuseteile 8,9 durchgreifen und in ein in der Deichsel ausgebildetes Gewinde eingreifen, wobei die Schrauben 18 die Lagergehäuseteile 8,9 miteinander und an der Deichsel befestigen. Dadurch kann die Zahl der benötigten Verbindungsmittel gering gehalten werden.

Weiters kann vorgesehen sein, dass der erste Lagergehäuseteil 8 und der zweite Lagergehäuseteil 9 wenigstens einen Rastfortsatz 15 und wenigstens eine gegengleiche Rastfortsatzaufnahme 16 aufweisen. Hierbei kann ein seitliches Verschieben der beiden Lagergehäuseteile 8,9 zueinander unterbunden werden.

Gemäß der bevorzugten Ausführungsform sind vier Paare an Rastfortsätzen 15 und Rastfortsatzaufnahmen 16 vorgesehen.

Bevorzugt kann weiters vorgesehen sein, dass die wenigstens eine Gegenkontaktfläche 14 in einem Bereich zwischen zwei Verbindungsmittelaufnahmen 17 angeordnet ist. Dadurch können auf den Schaft 3 einwirkende Kräfte an besonders gut befestigten Bereichen des Lagergehäuses 4 an das Lagergehäuse 4 weitergeleitet werden.

In der bevorzugten Ausführungsform sind vier Verbindungsmittelaufnahmen 17 vorgesehen, welche jeweils zur Hälfte in dem ersten Lagergehäuseteil 8 und dem zweiten Lagergehäuseteil 9 ausgebildet sind. Hierbei sind die vier Verbindungsmittelaufnahmen 17 zu zwei Paaren aufgeteilt, wobei jedes Paar zwei Verbindungsmittelaufnahmen 17 aufweist, welche beidseitig am Schaft 3 vorbei führen. Hierbei kann bei dem Paaren der Verbindungsmittelaufnahmen 17 eine Gegenkontaktfläche 14 ausgebildet sein.

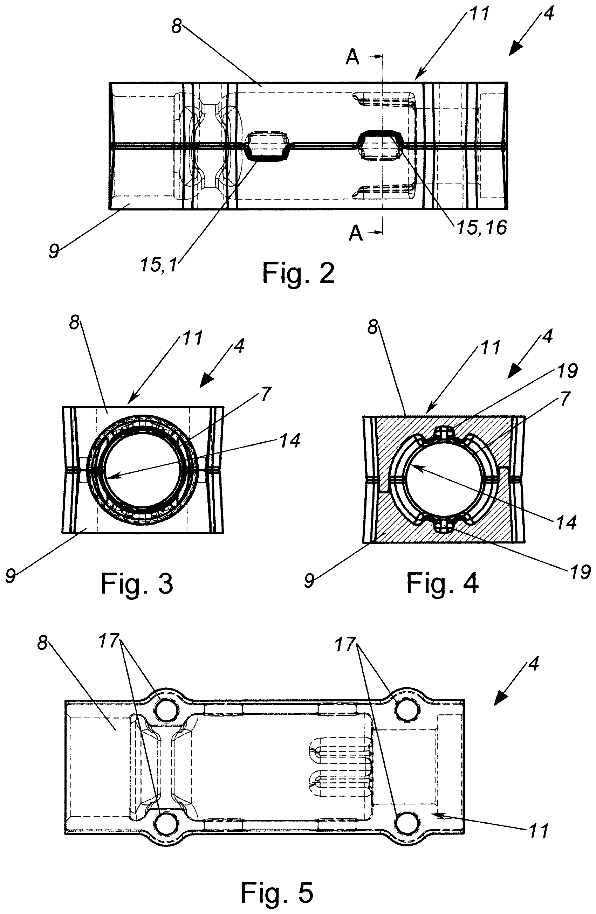

Bevorzugt kann weiters vorgesehen sein, dass der Schaft 3 einen Drehsicherungsfortsatz 10 aufweist. Der Drehsicherungsfortsatz 10 verhindert eine Verdrehung des Schaftes 4 um die Längsachse. Hierbei kann der Drehsicherungsfortsatz 10 insbesondere im ersten Teil 6 angeformt sein, wobei in der Aufnahme 7, wie in Fig. 4 dargestellt, eine Drehsicherungsnut 19 ausgebildet ist, in welche der Drehsicherungsfortsatz 10 eingreifen kann. Durch die geteilte Ausbildung des Lagergehäuses 4 kann hierbei die Drehsicherung besonders einfach und zuverlässig ausgebildet sein.

Die Drehsicherungsnut 19 kann insbesondere in beiden Lagergehäuseteile 8 ausgebildet sein. Hierbei kann der Schaft 4 bei Bedarf um 180° verdreht eingebaut werden.

Weiters kann vorgesehen sein, dass in der Aufnahme 7 ein Kabelkanal ausgebildet ist. Der Kabelkanal kann zur Durchleitung elektrischer Kabel vorgesehen sein, wobei es hierbei besonders vorteilhaft ist, wenn eine Kabelverbindung zwischen Zugfahrzeug und Fahrzeuganhänger unmittelbar benachbart zu dem Kuppelelement 2 erfolgt. Durch die geteilte Ausbildung des Lagergehäuses 4 kann der Kabelkanal besonders leicht in die Aufnahme eingefräst ausgebildet sein.

Weiters kann vorgesehen sein, dass am Schaft 4 Sensoren angebracht sind, beispielsweise am Kuppelelement 2 oder am ersten Teil 6 des Schaftes 3. Diese Sensoren können beispielsweise Dehnungsmessstreifen umfassen, welche die Zug- und/oder Biegebelastungen messen, wodurch eine Überschreitung der ausgelegten Belastung oder ein sich anbahnendes Materialversagen zuverlässig erkannt werden kann. Die Zuleitung der Kabeln für die Sensoren kann insbesondere über den Kabelkanal erfolgen.

## Patentansprüche

1. Hochlastzugöse (1) für einen Fahrzeuganhänger, wobei ein ein Kuppelelement (2) aufweisender gerader Schaft (3) in einem Lagergehäuse (4) angeordnet ist, wobei auf der dem Kuppelelement (2) abgewandten Seite des Schaftes (3) ein Sicherungselement (5) des Schaftes (3) an dem Lagergehäuse (4) abgestützt ist, wobei das Lagergehäuse (4) geteilt ausgebildet ist, wobei ein erster Teil (6) des Schaftes (3) in einer Aufnahme (7) des Lagergehäuses (4) angeordnet ist, **dadurch gekennzeichnet, dass** in der Aufnahme (7) ein Kabelkanal **ausgebildet** ist.

2. Hochlastzugöse (1) nach Anspruch 1, **dadurch gekennzeichnet, dass** das Sicherungselement (5) an einer Außenseite des Lagergehäuses (4) abgestützt ist.

3. Hochlastzugöse (1) nach Anspruch 1 oder 2, **dadurch gekennzeichnet, dass** der Schaft (3) einstückig ausgebildet ist.

4. Hochlastzugöse (1) nach einem der Ansprüche 1 bis 3, **dadurch gekennzeichnet, dass** das Lagergehäuse (4) ein erstes Lagergehäuseteil (8) und ein zweites Lagergehäuseteil (9) aufweist.

5. Hochlastzugöse (1) nach Anspruch 4, **dadurch gekennzeichnet, dass** das erste Lagergehäuseteil (8) und das zweite Lagergehäuseteil (9) zerstörungsfrei lösbar miteinander verbunden sind.

6. Hochlastzugöse (1) nach einem der Ansprüche 1 bis 5, **dadurch gekennzeichnet, dass** das Lagergehäuse (4) im Wesentlichen entlang einer ersten Ebene geteilt ist, und dass eine Längsachse des Schaftes (3) in der ersten Ebene angeordnet ist.

7. Hochlastzugöse (1) nach einem der Ansprüche 1 bis 6, **dadurch gekennzeichnet, dass** der Schaft (3) einen Drehsicherungsfortsatz (10) aufweist.

8. Fahrzeuganhänger umfassend eine Hochlastzugöse (1) nach einem der Ansprüche 1 bis 7.

## Claims

1. Heavy-duty drawbar eye (1) for a vehicle trailer, wherein a straight shaft (3) comprising a coupling element (2) is arranged in a bearing housing (4), wherein a securing element (5) of the shaft (3) is supported on the bearing housing (4) on the side of the shaft (3) facing away from the coupling element (2), wherein the bearing housing (4) is designed to be split, wherein a first part (6) of the shaft (3) is arranged in a receptacle (7) of the bearing housing (4), **characterized in that** a cable channel is formed in the receptacle (7).

2. Heavy-duty drawbar eye (1) according to claim 1, **characterized in that** the securing element (5) is supported on an outer side of the bearing housing (4).

3. Heavy-duty drawbar eye (1) according to claim 1 or 2, **characterized in that** the shaft (3) is integrally formed.

4. Heavy-duty drawbar eye (1) according to one of the claims 1 to 3, **characterized in that** the bearing housing (4) has a first bearing housing part (8) and a second bearing housing part (9).

5. Heavy-duty drawbar eye (1) according to claim 4, **characterized in that** the first bearing housing part (8) and the second bearing housing part (9) are non-destructively releasably connected to each other.

6. Heavy-duty drawbar eye (1) according to one of the claims 1 to 5, **characterized in that** the bearing housing (4) is substantially divided along a first plane, and that a longitudinal axis of the shaft (3) is arranged in the first plane.

7. Heavy-duty drawbar eye (1) according to one of the claims 1 to 6, **characterized in that** the shaft (3) has an anti-rotation projection (10).

8. A vehicle trailer comprising a heavy-duty drawbar eye (1) according to one of the claims 1 to 7.

## Revendications

1. Anneau d'attelage à charge élevée (1) pour une remorque de véhicule, dans lequel une tige droite (3) présentant un élément d'accouplement (2) est disposée dans un logement de palier (4), dans lequel un élément de fixation (5) de la tige (3) est en appui sur le logement de palier (4) du côté de la tige (3) opposé à l'élément d'accouplement (2), dans lequel le logement de palier (4) est divisé, dans lequel une première partie (6) de la tige (3) est disposée dans un emplacement de réception (7) du logement de palier (4), **caractérisé en ce qu'**un conduit de câbles est formé dans l'emplacement de réception (7).

2. Anneau d'attelage à charge élevée (1) selon la revendication 1, **caractérisé en ce que** l'élément de fixation (5) est en appui sur une face extérieure du logement de palier (4).

3. Anneau d'attelage à charge élevée (1) selon la revendication 1 ou 2, **caractérisé en ce que** la tige (3) est réalisée d'une seule pièce.

4. Anneau d'attelage à charge élevée (1) selon l'une des revendications 1 à 3, **caractérisé en ce que** le logement de palier (4) présente une première partie de logement de palier (8) et une seconde partie de logement de palier (9).

5. Anneau d'attelage à charge élevée (1) selon la revendication 4, **caractérisé en ce que** la première partie de logement de palier (8) et la seconde partie de logement de palier (9) sont reliées ensemble de manière détachable sans destruction.

6. Anneau d'attelage à charge élevée (1) selon l'une des revendications 1 à 5, **caractérisé en ce que** le logement de palier (4) est divisé sensiblement le long d'un premier plan et **en ce qu'**un axe longitudinal de la tige (3) est disposé dans le premier plan.

7. Anneau d'attelage à charge élevée (1) selon l'une des revendications 1 à 6, **caractérisé en ce que** la tige (3) comporte une saillie anti-rotation (10).

8. Remorque de véhicule comprenant un anneau d'attelage à charge élevée (1) selon l'une des revendications 1 à 7.
